# EUROPÄISCHE PATENTSCHRIFT

(11) **EP 0 735 119 B1**
(45) Veröffentlichungstag und Bekanntmachung des Hinweises auf die Patenterteilung: **16.08.2001**
(21) Anmeldenummer: 96103114.3
(22) Anmeldetag: 01.03.1996
(51) Int. Cl.: C09D 5/18

(54) **Flammwidrige Überzugsmasse**
Flame-retardant coating composition
Composition de revêtement résistant à la flamme

(30) Priorität: 31.03.1995 DE 19511928
(43) Veröffentlichungstag der Anmeldung: 02.10.1996
(73) Patentinhaber: Clariant GmbH, 65929 Frankfurt am Main (DE)
(72) Erfinder: Jenewein, Elke, Dipl.-Ing., D-86368 Gersthofen (DE); Pirig, Wolf-Dieter,, D-53879 Euskirchen (DE)

(56) Entgegenhaltungen:
- EP-A- 0 568 354
- EP-A- 0 584 567
- WO-A-89/01011
- DE-A- 2 844 132

## Beschreibung

Die vorliegende Erfindung betrifft aufblähbare, halogenfreie Überzugsmassen, ein Verfahren zu deren Herstellung und ihre Verwendung. Die Überzugsmassen zeigen sich neben ihrer Flammwidrigkeit vor allem durch ein sehr verarbeitungsfreundliches Verhalten aus.

Epoxidharze werden heute in großem Umfang zur Herstellung von Epoxidharz-Formmassen und zur Beschichtung mit hohem thermischem, mechanischem und elektrischem Eigenschaftsniveau sowie zur Herstellung von Laminaten eingesetzt. Die verschiedenen Ausgangskomponenten (Epoxidharz-Komponente) lassen sich unter Verwendung von Härtern (Härter-Komponente), beispielsweise Carbonsäureanhydriden, Aminen, Phenolen oder Isocyanaten oder auch durch ionische Polymerisation zu hochwertigen Materialien umsetzen. Die Epoxidharze lassen sich im allgemeinen leicht verarbeiten, da sie im Ausgangszustand niedermolekular oder oligomer sind und bei normaler Verarbeitungstemperatur eine niedrige Viskosität aufweisen. Sie lassen sich somit leicht vergießen oder bei Tränk- und Imprägnierprozessen anwenden.

Gemäß den geforderten Anwendungsbereichen (z.B. Fußbodenbeschichtungen auf Ölbohrinseln, Parkhäusern, Flughäfen usw.) müssen solche Überzugsmassen flammwidrig eingestellt werden. Epoxidharze und Epoxidharz-Formmassen für solche Anwendungen müssen also selbstverlöschend sein und dürfen den Brand nicht weiterleiten.

Epoxidharze bzw. Epoxidharz-Formmassen werden heute mittels halogenhaltiger, insbesondere mittels bromhaltiger, aromatischer Komponenten flammwidrig eingestellt. Solche Komponenten enthalten häufig Antimontrioxid als Synergisten und werden in das Epoxidharz eingelagert.

So beschreibt die EP-A-0 142 074 eine Intumeszenz-Zusammensetzung, die u.a. ein Epoxidharz, Phosphor-, Zink- oder Borverbindungen enthält, und die bei der Zersetzung unter großer Hitze eine Reihe von anorganischen und organischen, ökologisch und toxikologisch bedenklichen Produkten freisetzt.

Es besteht daher ein erheblicher Bedarf an Epoxidharzen in Form von Überzugsmassen, die eine hohe Flammwidrigkeit aufweisen, ohne daß sie halogenhaltige Komponenten oder andere, ökologisch oder toxikologisch bedenkliche Produkte enthalten.

Es war daher Aufgabe der Erfindung, aufblähbare, halogenfreie, flammhemmende Überzugsmassen zur Verfügung zu stellen, die neben einer hohen Flammwidrigkeit einfach und kostengünstig herstellbar sind und sich auf einfache Art und Weise anwenden lassen.

Die Erfindung betrifft somit aufblähbare, halogenfreie, flammhemmende Überzugsmassen, die

| | |
|---|---|
| 40 bis 90 Gew.-% | eines Epoxidharzes, welches aus Polyepoxidverbindungen mit einem mittleren Molekulargewicht Mₙ von bis zu 9000 besteht und |
| 10 bis 60 Gew.-% | einer Flammschutzmischung aus |
| 80 bis 50 Gew.-% | eines Ammoniumpolyphosphats der Formel (NH₄PO₃)ₙ, worin n eine Zahl von 200 bis 1000 ist (= Komponente A), und |
| 50 bis 20 Gew.-% | einer Verbindung (= Komponente B) enthaltend |

a) 40 bis 66 mol.-% von Einheiten der Formel I 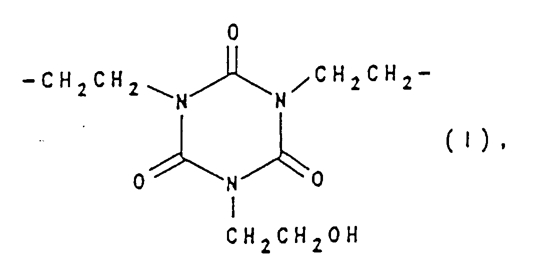
b) 0 bis 10 mol-% von Einheiten der Formel II 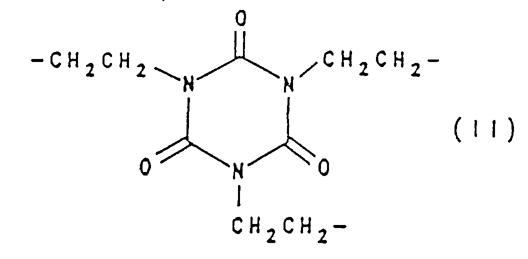
c) mindestens 24 mol.-% von Einheiten der Formel III

   Ar(COO-)ₘ (III)

   worin Ar ein ein-, zwei- oder dreikerniges aromatisches Sechsringsystem bedeutet und m 2, 3 oder 4 ist, enthält.

Eine solche Flammschutzmischung ist in der EP-A-0 584 567 beschrieben. Die erfindungsgemäß eingesetzten halogenfreien Epoxidverbindungen (im folgenden auch Polyepoxidverbindungen genannt) können gesättigt oder ungesättigt sowie aliphatisch, cycloaliphatisch, aromatisch und/oder heterocyclisch sein. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen oder ähnliche. Es können auch Gemische verschiedener Polyepoxidverbindungen verwendet werden. Das mittlere Molekulargewicht Mₙ dieser Polyepoxidverbindungen kann bis zu etwa 9000 betragen, liegt jedoch im allgemeinen bei etwa 150 bis 4000.

Beispielsweise handelt es sich bei diesen Polyepoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen, wie Phenol und/oder Kresole, mit Aldehyden, insbesondere Formaldehyd in Gegenwart saurer Katalysatoren), die man in bekannter Weise, beispielsweise durch Umsetzung der jeweiligen Polyole mit Epichlorhydrin, erhält.

Als mehrwertige Phenole sind hier beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4-Dihydroxydiphenyl, 4,4'-Dihydroxybenzophenon, Bis-(4-hydroxyphenyl)-1,1-ethan, Bis-(4-hydroxyphenyl)-1,1'-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-1,1'-ether. Bisphenol A und Bisphenol F sind hierbei bevorzugt.

Auch die Polyglycidylether von mehrwertigen aliphatischen Alkoholen sind als Polyepoxidverbindung geeignet. Als Beispiele derartiger mehrwertiger Alkohole seien 1,4-Butandiol, 1,6-Hexandiol, Polyalkylenglykole, Glycerin, Trimethylolpropan, Bis-(4-hydroxycyclohexyl)-2,2-propan und Pentaerythrit genannt.

Weiter kommen als Polyepoxidverbindungen auch (Poly)glycidester in Frage, die man erhält durch Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Phthal-, Isophthal-, Terephthal-, Tetrahydrophthal- oder Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Auch Polyepoxidverbindungen, die die Epoxidgruppen in statistischer Verteilung über die Molekülkette enthalten und die durch Emulsions-Copolymerisation unter Verwendung von olefinisch ungesättigten, diese Epoxidgruppen enthaltenden Verbindungen hergestellt werden können, wie z.B. Glycidylester der Acryl- oder Methacrylsäure, können in manchen Fällen vorteilhaft eingesetzt werden.

Weitere verwendbare Polyepoxidverbindungen sind beispielsweise solche auf der Basis heterocyclischer Ringsysteme, wie z.B. Hydantoinepoxidharze, Triglycidylisocyanurat und/oder dessen Oligomeren, Triglycidyl-p-aminophenol, Triglycidyl-p-aminodiphenylether, Tetraglycidyldiaminodiphenylmethan, Tetraglycidyldiaminodiphenylether,Tetrakis(4-glycidoxyphenyl)-ethan, Urazolepoxide, Uracilepoxide, oxazolidinonmodifizierte Epoxidharze. Weiterhin Polyepoxide auf der Basis von aromatischen Aminen, wie Anilin, beispielsweise N,N-Diglycidylanilin, Diaminodiphenylmethan und N,N'-Dimethylaminodiphenylmethan oder -sulfon. Weitere geeignete Polyepoxidverbindungen sind im "Handbook of Epoxy Resins" von Henry Lee und Kris Neville, McGraw-Hill Book Company, 1967, in der Monographie von Henry Lee "Epoxy Resins", American Chemical Society, 1970, in Wagner/Sarx, "Lack-kunstharze", Carl Hanser Verlag (1971), 5. Auflage,174 ff., in der "Angew. Makromol. Chemie", Bd. 44 (1975), Seiten 151 bis 163, in der DE-Offenlegungsschrift 27 57 733 sowie in der EP-Offenlegungsschrift 0 384 939 beschrieben.

Bevorzugt eingesetzte Polyepoxidverbindungen sind Bisglycidylether auf Basis von Bisphenol A, Bisphenol F und Bisphenol S (Umsetzungsprodukte dieser Bisphenole und Epichlor(halogen)hydrin) oder deren Oligomere, Polyglycidylether von Phenol/Formaldehyd- und/oder Kresol/Formaldehyd-Novolake sowie Diglycidylester der Phthal-, Isophthal-, Terephthal-, Tetrahydrophthal- und/oder Hexahydrophthalsäure sowie der Trimellithsäure, N-Glycidylverbindungen von aromatischen Aminen und heterocyclischen Stickstoffbasen, wie N,N-Diglycidylanilin, N,N,O-Triglycidyl-p-aminophenol, Triglycidylisocyanurat und N,N,N',N'-Tetraglycidyl-bis-(p-aminophenyl)-methan, Hydantoin-Epoxidharze und Aracid-Epoxidharze sowie Di- und Polyglycidylverbindungen von mehrwertigen aliphatischen Alkoholen, wie 1,4-Butandiol, Trimethylolpropan und Polyalkylenglykolen. Des weiteren sind auch oxazolidinonmodifizierte Epoxidharze geeignet. Derartige Verbindungen sind bereits bekannt (siehe: "Angew. Makromol. Chem.", Bd. 44 (1975), Seiten 151 bis 163, sowie US-PS 3 334 110); beispielhaft sei hierfür das Umsetzungsprodukt von Bisphenol-A-diglycidylether mit Diphenylmethandiisocyanat (in Gegenwart eines geeigneten Beschleunigers) genannt. Die Polyepoxidharze können bei der Herstellung der erfindungsgemäßen Überzugsmasse einzeln oder im Gemisch vorliegen.

Als Härter-Komponenten kommen aliphatische und aromatische Polyamine in Frage. Aromatische Polyamine sind beispielsweise in der EP-A-0 274 646 beschrieben. Sie werden durch Trimerisierung von 2,6- oder 2,4-Diisocyanato-alkylbenzolen und nachfolgender Hydrolyse der verbleibenden Isocyanatgruppen hergestellt. Solche Härter-Komponenten können einzeln oder im Gemisch eingesetzt werden. Derartige Gemische sind großtechnisch erhältlich und erlauben eine kostengünstige Herstellung der Härterkomponente.

Als weitere, additive Härterkomponente (d.h. zusätzlich zum eigentlichen Härter) können heterocyclische Polyamine mit Harnstoffgruppen eingesetzt werden. Auch andere aromatische Polyamine, wie etwa 4,4'-Diaminodiphenylmethan, 4,4'-Diaminodiphenylsulfon, und/oder andere heterocyclische Polyamine können mit einem Gewichtsanteil bis zu maximal 30 % im Härter-Gemisch eingesetzt werden.

Bevorzugt enthält die aufblähbare, halogenfreie Überzugsmasse 60 bis 70 Gew.-% eines Epoxidharzes und 30 bis 40 Gew.-% der vorstehend beschriebenen Flammschutzmischung.

Bevorzugt enthält die erfindungsgemäße Überzugsmasse als weitere Zusätze Beschleuniger, Füllstoffe, Pigmente, Flexibilisatoren und/oder Reaktiv-Verdünner.

Als Beschleuniger kommen vor allem Imidazolderivate, beispielsweise 2-Methylimidazol, 2-Phenylimidazol und 2-Heptadecylimidazol in Frage; weiterhin Phosphine, tertiäre Amine wie Benzylmethylamin und Tris(dimethylaminomethyl)phenol, sowie Metallseifen und Acetylacetonate.

Füllstoffe sind beispielsweise Quarz, Bolus Alba (China Clay), Kreide, Wollastonit, Talkum, Aluminiumoxid-trihydrat, Antimontrioxid.

Als Pigmente können Gasruß, Phthalocyanin-Pigmente und Metalloxide eingesetzt werden.

Zur Verbesserung der Zähigkeit der Überzugsmasse können als Flexibilisatoren Butadien-Acrylnitril-Kautschuk und andere aliphatische Polymere verwendet werden.

Als Reaktiv-Verdünner kommen beispielsweise mono- oder polyfunktionelle, niedermolekulare Alkohole, die mit Epichlorhydrin umgesetzt werden, in Frage.

Das für die erfindungsgemäße Überzugsmasse eingesetzte Epoxidharz ist üblicherweise aus einer Epoxidharz-Komponente und einer Härter-Komponente zusammengesetzt.

Als Epoxidharz-Komponente sind Bisphenol A, Bisphenol F oder Gemische hiervon und als Härter-Komponente aliphatische Amine bevorzugt.

Die vorliegende Aufgabe wird ebenfalls gelöst durch ein Verfahren zur Herstelllung von aufblähbaren, halogenfreien, flammhemmenden Überzugsmassen aus Epoxidharzen und der vorgenannten Flammschutzmischung, dadurch gekennzeichnet, daß man
eine Epoxidharz-Komponente welche aus Polyepoxidverbindungen mit einem mittleren Molekulargewicht Mₙ von bis zu 9000 besteht mit einer Flammschutzmischung aus

| | |
|---|---|
| 80 bis 50 Gew.-% | eines Ammoniumpolyphosphats der Formel (NH₄PO₃)ₙ, worin n eine Zahl von 200 bis 1000 ist (= Komponente A), und |
| 50 bis 20 Gew.-% | einer Verbindung (= Komponente B) enthaltend |

a) 40 bis 66 mol.-% von Einheiten der Formel I 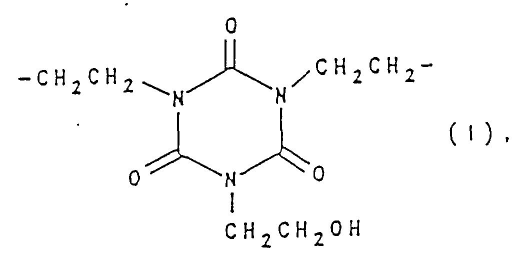
b) 0 bis 10 mol-% von Einheiten der Formel II 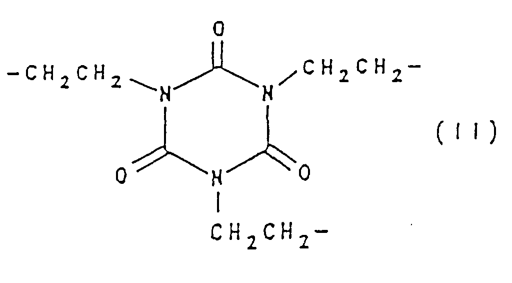
c) mindestens 24 mol.-% von Einheiten der Formel III

   Ar(COO-)ₘ (III)

   worin Ar ein ein-, zwei- oder dreikerniges aromatisches Sechsringsystem bedeutet und m 2, 3 oder 4 ist, besteht,
umsetzt und anschließend mit einer Härterkomponente in die Überzugsmasse überführt.

Beim Verfahren können, falls gewünscht, auch Lösungs- und Verdünnungsmittel eingesetzt werden. Dabei sind aprotische, polare Lösungsmittel bevorzugt. Beispiele hierfür sind: N-methylpyrrolidon, Dimethylformamid, Ether wie etwa Diethylether, Tetrahydrofuran, Dioxan, Ethylglykolether, Propylenglykolether, Butylglykolether von Monoalkoholen mit einem ggf. verzweigten Alkylrest von 1 bis 6 Kohlenstoffatomen.

Andere Lösungsmittel sind z.B. Ketone, wie etwa Aceton, Methylethylketon, Methylisopropylketon, Methylisobutylketon und Cyclohexanon, aber auch Ester, wie Ethylacetat, Butylacetat, Ethylenglycolacetat und Methoxypropylacetat können eingesetzt werden. Weitere geeignete Lösungsmittel sind halogenierte Kohlenwasserstoffe sowie cycloaliphatische und/oder aromatische Kohlenwasserstoffe, bevorzugt sind dabei Hexan, Heptan, Cyclohexan, Toluol sowie Dixylole. Es ist möglich, diese Lösemittel einzeln oder im Gemisch einzusetzen.

Bevorzugt erfolgt die Umsetzung der Epoxidharz-Komponente mit der Flammschutzmischung und dem Härter bei Temperaturen von -10 bis +200 °C.

Die Erfindung betrifft ebenfalls die Verwendung der vorgenannten Überzugsmassen zur Herstellung von Überzügen.

Bevorzugt werden die erfindungsgemäßen Überzugsmassen zum Beschichten von Fußböden, Wänden oder Formteilen verwendet.

Die erfindungsgemäßen Überzugsmassen weisen eine gute Flammwidrigkeit auf und lassen sich auf einfache Art und Weise verarbeiten. Dementsprechend sind sie einfach und kostengünstig herstellbar.

In den folgenden Beispielen werden flammhemmende Überzugsmassen hergestellt und ihre Wirksamkeit ermittelt, wobei als Flammschutzmischung Hostaflam AP 750 (Firma Hoechst AG, Frankfurt) eingetragen wurden. Die Prüfung der Isolierfähigkeit der unter Verwendung dieser Überzugsmassen hergestellten Produkte erfolgte nach DIN 4102, Teil 2 (1977) in einem Kleinprüfstand gemäß DIN 4102, Teil 8 (1986), während die Prüfung der Oberflächengüte visuell vorgenommen wurde.

### Beispiele 1 bis 7

In den Beispielen wurden die folgenden Produkte eingesetzt:
® Hostaflam AP 462 (Hoechst AG, Frankfurt/Main)
   - Es handelt sich um ein mikroverkapseltes Ammoniumpolyphosphat auf Basis von ® Hostaflam AP 422, das nach dem Verfahren der EP-B-0 180 795 hergestellt wurde und etwa 10 Masse% Kapselmaterial, bestehend aus einem gehärteten Melamin/Formaldehyd-Harz, enthält. Bei ® Hostaflam AP 422 (Hoechst AG, Frankfurt/Main) handelt es sich um ein freifließendes, pulverförmiges, in Wasser schwer lösliches Ammoniumpolyphosphat der Formel (NH₄PO₃)ₙ mit n = 20 bis 1000, insbesondere 500 bis 1000. Der Anteil der Teilchen mit einer Teilchengröße kleiner 45 µm beträgt mehr als 99 %.
® Hostaflam AP 750 (Hoechst AG, Frankfurt/Main)
   - Es handelt sich um eine halogenfreie Flammschutzmittelmischung, die polymeres Ammoniumpolyphosphat in Verbindung mit aromatischen Carbonsäureestern des Tris(2-hydroxyethyl)-isocyanurats als Synergisten enthält.
® Apyral 2 (VAW Vereinigte Aluminium Werke AG, Bonn)
   - Es handelt sich um einen Aluminiumhydroxid-Typ, der aus dem BAYER-Prozeß stammt und nach einem speziellen Verfahren modifiziert wurde (EP 0 011 667).
® Beckopox EP 140 (Hoechst AG, Frankfurt/Main)
   - Es handelt sich um ein niedrigmolekulares Kondensationsprodukt aus Bisphenol A und Epichlorhydrin mit einer Dichte von 1,16 g/ml (bei 25 °C) und einem Epoxid-Äquivalentgewicht von 180 bis 192.
® Beckopox-Spezialhärter EH 625 (Hoechst AG, Frankfurt/Main)
   - Es handelt sich um ein modifiziertes, aliphatisches Polyamin mit einem H-aktiven Äquivalent- gewicht von 73 und einer dynamischen Viskosität von 800 bis 1200 mPas (bei 25 °C).

### Beispiel 1

In einem Rührgefäß wurden nacheinander 100 g Beckopox EP 140 und 100 g Hostaflam AP 750 (42 %) eingetragen und nach ausreichender Durchmischung mit 40 g Beckopox EH 625 umgesetzt. Die resultierende Überzugsmasse mit einem Phosphorgehalt von 8,7 % wurde mit einer Rolle einseitig auf eine Stahlplatte (St 37) von 28 x 28 cm aufgetragen. Die Masse härtete einen Tag bei Raumtemperatur aus, ihre Schichtdicke wurde mit 1,5 mm ermittelt.

Die Oberfläche der Beschichtung war glatt und rißfrei.

Die Brandprüfung der beschichteten Platte gemäß DIN 4102 ergab die Brandklasse F 30.

### Beispiel 2

Es wurde die gleiche Überzugsmasse wie im Beispiel 1 hergestellt, jedoch betrug die Auftragsdicke 2,4 mm.

Die Oberfläche der Beschichtung war glatt und rißfrei.

Die Brandprüfung der beschichteten Platte gemäß DIN 4102 ergab die Brandklasse F 60.

### Beispiel 3

Es wurde vorgegangen wie im Beispiel 1, wobei jedoch 120 g Beckopox EP 140, 72 g Hostaflam AP 750 (30 %) und 48 g Beckopox EH 625 verwendet wurden. Die Überzugsmasse wurde in einer Schichtdicke von 1,5 mm auf die Stahlplatte aufgetragen, der Phosphorgehalt der Überzugsmasse betrug 6,3 %.

Wie in Beispiel 1 war die Oberfläche der Beschichtung glatt und rißfrei.

Die Brandprüfung der beschichteten Platte gemäß DIN 4102 ergab die Brandklasse F 30.

### Beispiel 4

Es wurde eine Überzugsmasse gemäß Beispiel 3 hergestellt, wobei jedoch die Schichtdicke der Überzugsmasse auf der Stahlplatte 2,6 mm betrug.

Die Oberfläche der Beschichtung war glatt und rißfrei.

Die Brandprüfung der beschichteten Platte gemäß DIN 4102 ergab die Brandklasse F 60.

### Beispiel 5 (Vergleichsbeispiel)

Die gleiche Zusammensetzung wie im Beispiel 3, jedoch unter Verwendung von Hostaflam AP 462 anstatt Hostaflam AP 750, wurde mit einer Schichtdicke von 2 mm auf die Stahlplatte aufgetragen.

Die Oberfläche der Beschichtung war glatt und rißfrei.

Die Brandprüfung der beschichteten Platte gemäß DIN 4102 ergab die Brandklasse F 30.

### Beispiel 6 (Vergleichsbeispiel)

In einem Rührgefäß wurden nacheinander 120 g Beckopox EP 140, 64 g Apyral 2, 8 g Hostaflam AP 750 eingetragen und nach ausreichender Durchmischung mit 48 g Beckopox EH 625 umgesetzt.

Der Phosphorgehalt der Überzugsmasse betrug 0,7 %. Die Überzugsmasse wurde mit einer Schichtdicke von 2,2 mm auf die Stahlplatte aufgetragen.

Die Oberfläche der Beschichtung war nicht ganz so glatt wie in den vorhergehenden Beispielen.

Die Brandklasse F 30 wurde mit diesem Überzug nicht errreicht.

### Beispiel 7

Eine Zusammensetzung gemäß Beispiel 1 wurde nunmehr in einer Schichtdicke von etwa 7 mm auf die Stahlplatte aufgetragen.

Die Oberfläche der Beschichtung war glatt und rißfrei.

Die Brandprüfung der beschichteten Platte gemäß DIN 4102 ergab die Brandklasse F 60.

## Patentansprüche

1. Aufblähbare, halogenfreie flammhemmende Überzugsmasse, die
| | |
|---|---|
| 40 bis 90 Gew.-% | eines Epoxidharzes, welches aus Polyepoxidverbindungen mit einem mittleren Molekulargewicht Mₙ von bis zu 9000 besteht, und |
| 10 bis 60 Gew.-% | einer Flammschutzmischung aus |
| 80 bis 50 Gew.-% | eines Ammoniumpolyphosphats der Formel (NH₄PO₃)ₙ, worin n eine Zahl von 200 bis 1000 ist (= Komponente A), und |
| 50 bis 20 Gew.-% | einer Verbindung (= Komponente B) enthaltend |
a) 40 bis 66 mol.-% von Einheiten der Formel I 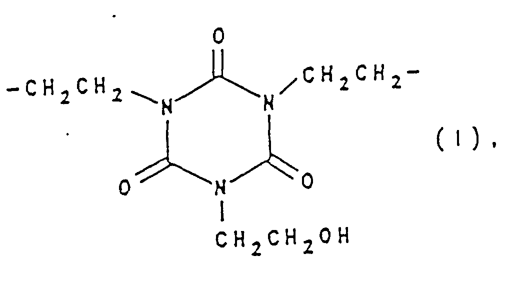
b) 0 bis 10 mol-% von Einheiten der Formel II 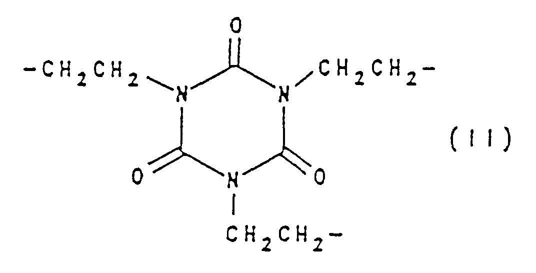
c) mindestens 24 mol.-% von Einheiten der Formel III
Ar(COO-)ₘ (III)
worin Ar ein ein-, zwei- oder dreikerniges aromatisches Sechsringsystem bedeutet und m 2, 3 oder 4 ist, besteht, enthält.

2. Aufblähbare, halogenfreie flammhemmende Überzugsmasse nach Anspruch 1, die
60 bis 70 Gew.-% eines Epoxidharzes und
30 bis 40 Gew.-% der Flammschutzmischung sowie gegebenenfalls weitere Zusätze enthält.

3. Aufblähbare, halogenfreie flammhemmende Überzugsmasse nach Anspruch 1 oder 2, dadurch gekennzeichnet, daß das Ammoniumpolyphosphat (Komponente A des Flammschutzsystems) mit 0,5 bis 25 % seines Gewichtes mit einem Coatingmittel umhüllt ist.

4. Aufblähbare, halogenfreie flammhemmende Überzugsmasse nach mindestens einem der Ansprüche 1 bis 3, dadurch gekennzeichnet, daß als weitere Zusätze Beschleuniger, Füllstoffe, Pigmente, Flexibilisatoren und/oder Reaktiv-Verdünner enthalten sind.

5. Aufblähbare, halogenfreie flammhemmende Überzugsmasse nach mindestens einem der Ansprüche 1 bis 4, dadurch gekennzeichnet, daß das Epoxidharz aus einer Epoxidharz-Komponente und einer Härter-Komponente zusammengesetzt ist.

6. Aufblähbare, halogenfreie flammhemmende Überzugsmasse nach mindestens einem der Ansprüche 1 bis 5, dadurch gekennzeichnet, daß es sich bei der Epoxidharz-Komponente um Bisphenol A, Bisphenol F oder Gemischen hiervon handelt und die Härter-Komponente aus einem aliphatischen Amin besteht.

7. Verfahren zur Herstellung von aufblähbaren, halogenfreien, flammhemmenden Überzugsmassen nach einem oder mehreren der Ansprüche 1 bis 6, dadurch gekennzeichnet, daß man eine Epoxidharz-Komponente welche aus Polyepoxidverbindungen mit einem mittleren Molekulargewicht Mₙ von bis zu 9000 besteht, mit einer Flammschutzmischung aus
| | |
|---|---|
| 80 bis 50 Gew.-% | eines Ammoniumpolyphosphats der Formel (NH₄PO₃)ₙ, worin n eine Zahl von 200 bis 1000 ist (= Komponente A), und |
| 50 bis 20 Gew.-% | einer Verbindung (= Komponente B) enthaltend |
a) 40 bis 66 mol.-% von Einheiten der Formel I 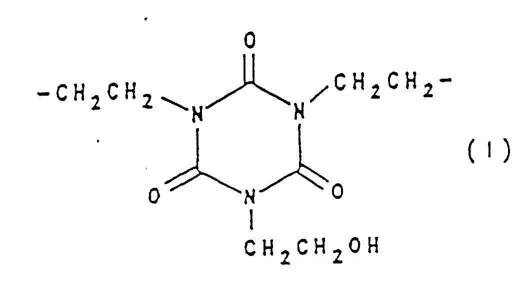
b) 0 bis 10 mol-% von Einheiten der Formel II 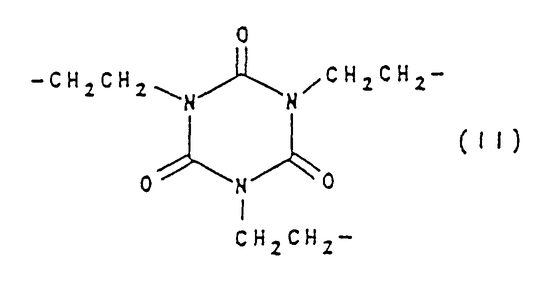
c) mindestens 24 mol.-% von Einheiten der Formel III
Ar(COO-)ₘ (III)
worin Ar ein ein-, zwei- oder dreikerniges aromatisches Sechsringsystem bedeutet und m 2, 3 oder 4 ist, besteht,
umsetzt und anschließend mit einer Härterkomponente in die Überzugsmasse überführt.

8. Verfahren nach Anspruch 7, dadurch gekennzeichnet, daß die Umsetzung bei Temperaturen von -10 bis +200°C erfolgt.

9. Verwendung von aufblähbaren, halogenfreien flammhemmenden Überzugsmassen gemäß den Ansprüchen 1 bis 6 oder hergestellt nach Anspruch 7 oder 8 zur Herstellung von Überzügen.

10. Verwendung von aufblähbaren, halogenfreien flammhemmenden Überzugsmassen gemäß den Ansprüchen 1 bis 6 oder hergestellt nach Anspruch 7 oder 8 zum Beschichten von Fußböden, Wänden oder Formteilen.

## Claims

1. An expandable, halogen-free flame-retardant coating composition which comprises
| | |
|---|---|
| from 40 to 90 % | by weight of an epoxy resin consisting of polyepoxide compounds having an average molecular weight Mₙ of up to 9000, and |
| from 10 to 60 % | by weight of a flameproofing mixture comprising |
| from 80 to 50 % | by weight of an ammonium polyphosphate of the formula (NH₄PO₃)ₙ in which n is a number from 200 to 1000 (= component A), and |
| from 50 to 20 % | by weight of a compound (= component B) comprising |
a) from 40 to 66 mol% of units of the formula I 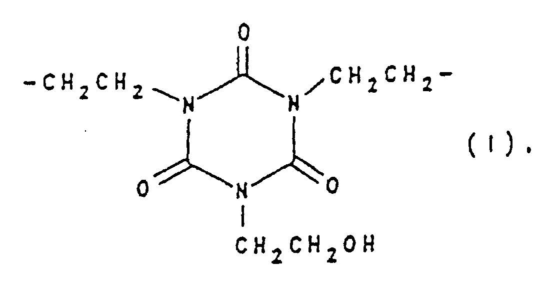
b) from 0 to 10 mol% of units of the formula II 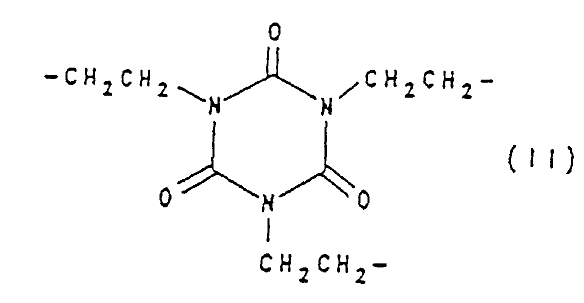 and
c) at least 24 mol% of units of the formula III
Ar(COO-)ₘ (III)
in which Ar is a mono-, bi- or tricyclic aromatic six-membered ring system and m is 2, 3 or 4.

2. An expandable, halogen-free flame-retardant coating composition as claimed in claim 1, which comprises from 60 to 70 % by weight of an epoxy resin and from 30 to 40 % by weight of a flameproofing mixture and, if desired, further additives.

3. An expandable, halogen-free flame-retardant coating composition as claimed in claim 1 or 2, wherein the ammonium polyphosphate (component A of the flameproofing system) is coated to from 0.5 to 25 % of its weight with a coating composition.

4. An expandable, halogen-free flame-retardant coating composition as claimed in at least one of claims 1 to 3, wherein further additives which are present are accelerators, fillers, pigments, flexibilizers and/or reactive diluents.

5. An expandable, halogen-free flame-retardant coating composition as claimed in at least one of claims 1 to 4, wherein the epoxy resin is composed of an epoxy resin component and a curing component.

6. An expandable, halogen-free flame-retardant coating composition as claimed in at least one of claims 1 to 5, wherein the epoxy resin component is bisphenol A, bisphenol F or a mixture thereof and the curing component comprises an aliphatic amine.

7. A process for the preparation of an expandable, halogen-free flame-retardant coating composition as claimed in one or more of claims 1 to 6, which comprises reacting an epoxy resin component consisting of polyepoxide compounds having an average molecular weight Mₙ of up to 9000, with a flameproofing mixture comprising
| | |
|---|---|
| from 80 to 50 % | by weight of an ammonium polyphosphate of the formula (NH₄PO₃)ₙ in which n is a number from 200 to 1000 (= component A), and |
| from 50 to 20 % | by weight of a compound (= component B) comprising |
a) from 40 to 66 mol% of units of the formula I 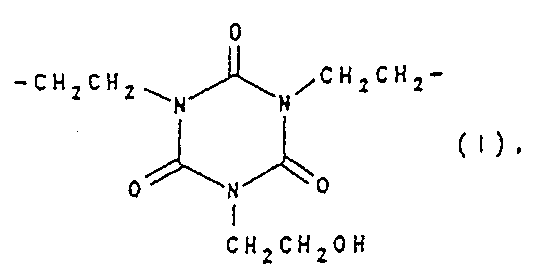
b) from 0 to 10 mol% of units of the formula II 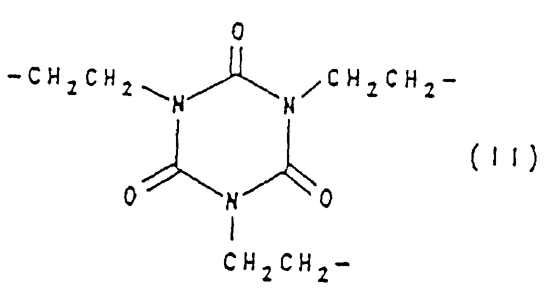 and
c) at least 24 mol% of units of the formula III
Ar(COO-)ₘ (III)
in which Ar is a mono-, bi- or tricyclic aromatic six-membered ring system and m is 2, 3 or 4, and then converting the product with a curing component into the coating composition.
comprising and then converting the product with a curing component into the coating composition.

8. The process as claimed in claim 7, wherein the reaction is carried out at temperatures from -10 to +200°C.

9. The use of an expandable, halogen-free flame-retardant coating composition as claimed in claims 1 to 6 or prepared as claimed in claim 7 or 8 for the production of coatings.

10. The use of an expandable, halogen-free flame-retardant coating composition as claimed in claims 1 to 6 or prepared as claimed in claim 7 or 8 for the coating of floors, walls or shaped articles.

## Revendications

1. Matière de revêtement retardatrice de combustion, non halogénée, gonflable, contenant
| | |
|---|---|
| de 40 à 90% en masse | d'une résine époxyde qui est constituée de composés polyépoxydes ayant une masse molaire moyenne Mₙ jusqu'à 9000 |
| de 10 à 60% en masse | d'un mélange ignifugeant constitué par |
| de 80 à 50% en masse | d'un polyphosphate d'ammonium de formule en masse (NH₄PO₃)ₙ, où n va de 200 à 1000 (= constituant A) et de 50 à 20% d'un composé (= constituant B) contenant |
a) de 40 à 66% molaires de motifs de formule I 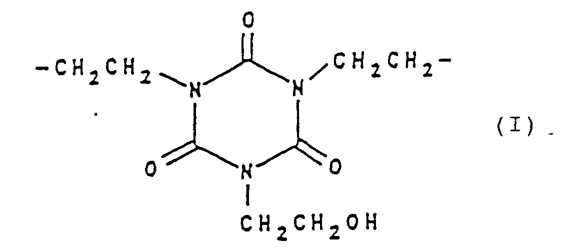
b) de 0 à 10% molaires de motifs de formule II 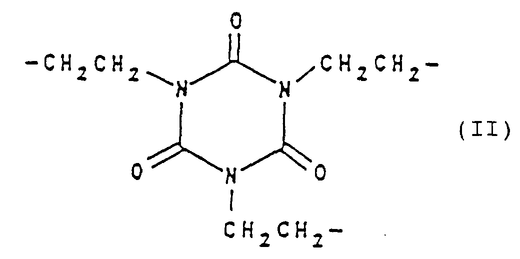
c) d'au moins 24% molaires de motifs de formule III
Ar(COO-)ₘ (III)
où Ar représente un système aromatique à six chaînons à un, deux ou trois noyaux et m vaut 2, 3 ou 4.

2. Matière de revêtement retardatrice de combustion, non halogénée, gonflable, selon la revendication 1, qui contient
de 60 à 70% en masse d'une résine époxyde et
de 30 à 40% en masse d'un mélange ignifugeant ainsi qu'éventuellement d'autres additifs.

3. Matière de revêtement retardatrice de combustion, non halogénée, gonflable, selon la revendication 1 ou 2, caractérisée en ce que le polyphosphate d'ammonium (constituant A du système ignifugeant) est enrobé d'un agent de revêtement en une quantité de 0,5 à 25% par rapport à son poids.

4. Matière de revêtement retardatrice de combustion, non halogénée, gonflable, selon au moins l'une des revendications 1 à 3, caractérisée en ce qu'elle contient, en tant qu'autres additifs, des accélérateurs, des charges, des pigments, des plastifiants et/ou diluants réactifs.

5. Matière de revêtement retardatrice de combustion, non halogénée, gonflable, selon au moins l'une des revendications 1 à 4, caractérisée en ce que la résine époxyde est constituée par un constituant résine époxyde et un constituant durcisseur.

6. Matière de revêtement retardatrice de combustion, non halogénée, gonflable, selon au moins l'une des revendications 1 à 5, caractérisée en ce que pour le constituant résine époxyde, il s'agit d'un bisphénol A, d'un bisphénol F ou leurs mélanges et le constituant durcisseur est constitué par une amine aliphatique.

7. Procédé pour la préparation de matières de revêtement retardatrices de combustion, non halogénées, gonflables, selon une ou plusieurs des revendications 1 à 6, caractérisé en ce qu'on fait réagir un constituant résine époxyde constitué par des composés polyépoxydes ayant une masse molaire moyenne Mₙ jusqu'à 9000, sur un mélange ignifugeant constitué
| | |
|---|---|
| de 40 à 90% en masse | d'une résine époxyde qui est constituée de composés polyépoxydes ayant une masse molaire moyenne Mₙ jusqu'à 9000 |
| de 10 à 60% en masse | d'un mélange ignifugeant constitué par |
| de 80 à 50% en masse | d'un polyphosphate d'ammonium de formule (NH₄PO₃)ₙ, où n va de 200 à 1000 (= constituant A) et |
| de 50 à 20% en masse | d'un composé (= constituant B) contenant |
a) de 40 à 66% molaires de motifs de formule I 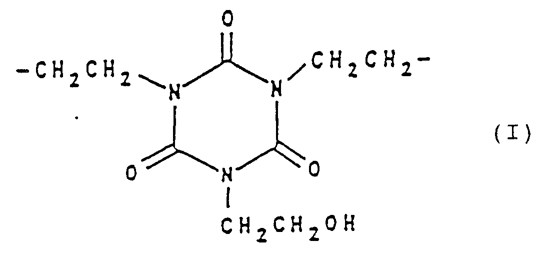
b) de 0 à 10% molaires de motifs de formule II 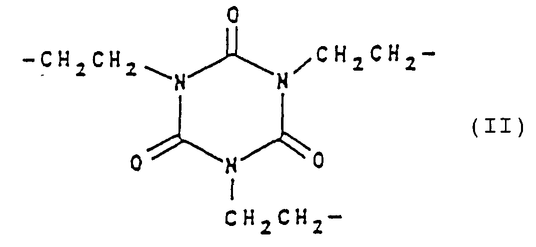
c) d'au moins 24% molaires de motifs de formule III
Ar(COO-)ₘ (IIi)
où Ar représente un système aromatique à six chaînons à un, deux ou trois noyaux et m vaut 2, 3 ou 4,
et ensuite on transforme en la matière de revêtement à l'aide d'un constituant durcisseur.

8. Procédé selon la revendication 7, caractérisé en ce qu'on réalise la réaction à une température de -10 à +200°C.

9. Utilisation de matières de revêtement retardatrices de combustion, non halogénées, gonflables, selon les revendications 1 à 6 ou préparées selon la revendication 7 ou 8, pour la préparation de revêtements.

10. Utilisation de matières de revêtement retardatrices de combustion, non halogénées, gonflables, selon les revendications 1 à 6 ou préparées selon la revendication 7 ou 8 pour le revêtement de sols, de parois ou de pièces moulées.
